(19) Europäisches Patentamt / European Patent Office / Office européen des brevets

(11) **EP 3 384 645 B1**

(12) **FASCICULE DE BREVET EUROPEEN**

(45) Date de publication et mention
de la délivrance du brevet:
**18.08.2021 Bulletin 2021/33**

(21) Numéro de dépôt: **16797549.9**

(22) Date de dépôt: **16.11.2016**

(51) Int Cl.:
*H04L 12/801* (2013.01)   *H04L 12/863* (2013.01)

(86) Numéro de dépôt international:
**PCT/EP2016/077876**

(87) Numéro de publication internationale:
**WO 2017/093022 (08.06.2017 Gazette 2017/23)**

(54) **PROCÉDÉ DE TRAITEMENT DE PAQUETS DE DONNÉES, PRODUIT PROGRAMME D'ORDINATEUR, MÉDIUM DE STOCKAGE, DISPOSITIF ET ÉQUIPEMENT NOEUD DE RÉSEAU CORRESPONDANTS**

VERFAHREN ZUR VERARBEITUNG VON DATENPAKETEN, ENTSPRECHENDES COMPUTERPROGRAMMPRODUKT, SPEICHERMEDIUM, VORRICHTUNG UND NETZWERKKNOTENGERÄT

METHOD FOR PROCESSING DATA PACKETS, CORRESPONDING COMPUTER PROGRAM PRODUCT, STORAGE MEDIUM, DEVICE AND NETWORK NODE DEVICE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **30.11.2015 FR 1561613**

(43) Date de publication de la demande:
**10.10.2018 Bulletin 2018/41**

(73) Titulaire: **ORANGE**
**92130 Issy-les-Moulineaux (FR)**

(72) Inventeurs:
• **DIEGO MAZA, William David**
**92320 - CHATILLON (FR)**

• **HAMCHAOUI, Isabelle**
**22730 Tregastel (FR)**
• **GUILLEMIN, Fabrice**
**22560 Pleumeur-Bodou (FR)**

(74) Mandataire: **Vidon Brevets & Stratégie**
**16B, rue de Jouanet**
**BP 90333**
**35703 Rennes Cedex 7 (FR)**

(56) Documents cités:
**US-A1- 2014 321 275**

**Description**

# 1 DOMAINE TECHNIQUE

La présente invention se rapporte au domaine de la transmission de paquets de données au sein d'un réseau, cette transmission s'effectuant depuis un équipement nœud amont vers un terminal client via un nœud aval disposant d'un lien de communication (par exemple radio) avec une bande passante variable et limitée à destination du terminal client.

Plus précisément, la présente invention se rapporte à la gestion de la qualité de service ressentie par le terminal client dans une telle configuration.

# 2 ARRIÈRE-PLAN TECHNOLOGIQUE

La gestion de la qualité de service ressentie par un utilisateur final est aujourd'hui encore essentiellement du ressort des opérateurs possédant les réseaux d'accès. En effet, plus coûteux et ne pouvant bénéficier d'un dimensionnement statistique très marqué, ces réseaux d'accès sont souvent « étroits » et sièges de congestions. La localisation naturelle des mécanismes permettant de pallier les dégradations liées à ces congestions est donc d'évidence au niveau des goulots d'étranglement correspondants, où il est aisé de prioriser les flux et de répartir les ressources, ou la pénurie.

Dans les réseaux fixes, des politiques de gestion de la qualité de service sont couramment implémentées à l'accès et permettent de prioriser certains flux sur d'autres considérés comme moins cruciaux en se basant par exemple sur les propriétés du protocole internet. A titre d'exemple, nous pouvons citer la technique dite « DiffServ » décrite dans le document « RFC 2475 - An Architecture for Differentiated Services- December 1998 ». De nombreux mécanismes complémentaires permettent d'assurer la plupart des politiques de gestion de qualité de service envisageables, depuis la simple priorisation des flux jusqu'à l'instauration de garanties de bande passante.

Malgré leur maturité, on constate cependant qu'il reste dans les réseaux fixes des entités dépourvues de tels mécanismes de priorisation des paquets. C'est par exemple le cas des multiplexeurs d'accès à la ligne d'abonné numérique (ou « DSLAM » pour « Digital Subscriber Line Access Multiplexer » en anglais) d'ancienne génération ou des équipements des stations radio de certains faisceaux hertziens. Il apparaît par ailleurs que ces entités sont souvent les goulots d'étranglement du réseau en terme de débit.

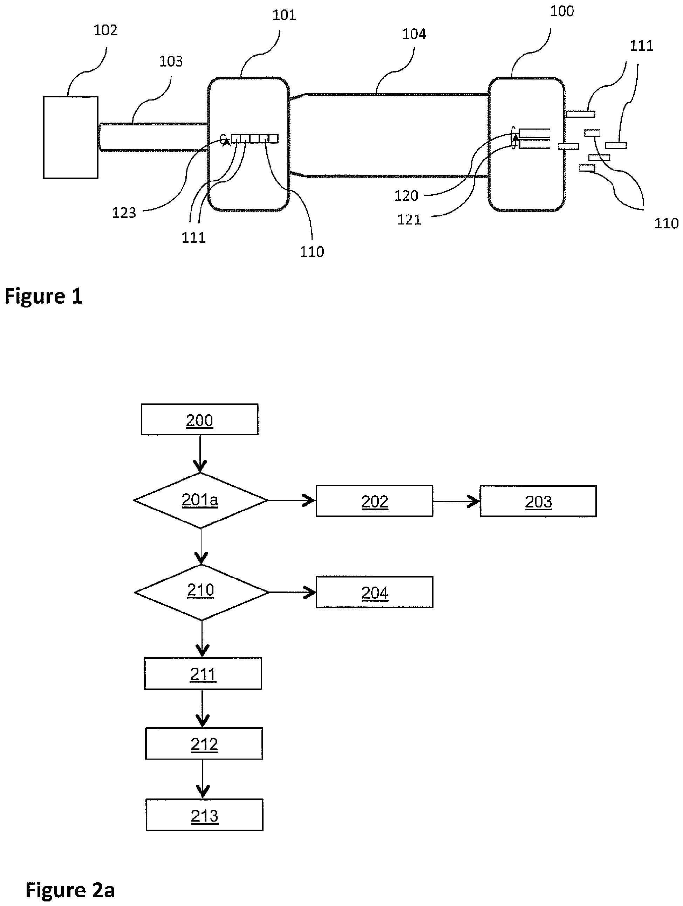

A titre illustratif, la **figure 1** présente une telle configuration connue dans un réseau fixe où le nœud aval 101 est un multiplexeur d'accès à la ligne d'abonné numérique qui n'implémente pas de fonctionnalités de gestion de la qualité de service. Par exemple, le nœud aval ne gère pas la couche 3 de la pile OSI (pour « Open Systems Interconnection » en anglais). Il ne peut donc pas lire les informations de l'en-tête d'un paquet de données internet indiquant un niveau de priorité de ce paquet, comme par exemple le marquage DSCP (pour « Differentiated Services Code Point » en anglais). Ainsi, tous les paquets reçus 110, 111 par le nœud aval 101, et à destination du terminal de l'utilisateur final 102, sont gérés dans une seule et même file d'attente 123, par exemple du type FIFO (pour « First In First Out » en anglais). A contrario, le nœud amont 100, par exemple un serveur d'accès large bande (ou « BRAS » pour Broadband Remote Access Server en anglais) implémente de telles fonctionnalités de gestion de la qualité de service (le nœud amont gère par exemple la couche 3 de la pile OSI). Il en résulte dans cet exemple que les paquets reçus 110, 111 par le nœud amont 100 à destination du terminal de l'utilisateur final 102 sont gérés dans deux files d'attentes distinctes 120, 121 en fonction d'un critère de priorité, par exemple le marquage DSCP de leur en-tête s'il s'agit de paquets internet.

Cependant, le débit 103 du nœud aval 101 étant inférieur au débit 104 du nœud amont 100, les files d'attente 120, 121 de ce dernier se retrouvent vides, empêchant par là-même toute gestion différenciée de ces paquets au niveau du nœud amont. Les paquets de différentes importances 110, 111 se retrouvent alors gérés indifféremment dans la même file d'attente 123 au niveau du nœud aval n'implémentant pas de fonctionnalités de gestion de la qualité de service.

Dans cette configuration, il apparaît que la qualité de service ne peut qu'être gérée de bout en bout entre le client et le serveur, par exemple via la mise en œuvre d'un protocole du type TCP (pour « Transmission Control Protocol » en anglais). Cette tendance conduit à l'évincement progressif des opérateurs d'accès en les cantonnant au rôle de fournisseur de connectivité.

La même problématique existe dans le cas des réseaux cellulaires. En effet, les organismes de standardisation ont défini des solutions de gestion de qualité de service telles que par exemple celle décrite dans le document de standardisation « 3GPP, "QoS Concept and Architecture," TS 23.107 version 8.2.0 Release 8, 2011 ». En pratique, ces solutions proposent d'assurer un certain niveau de qualité de service à certaines applications, via notamment un débit garanti. Cependant, il apparaît que ce mode de gestion de la qualité de service est non seulement coûteux, mais aussi difficile à valoriser. Par conséquent, ces fonctions sont très rarement déployées dans les réseaux actuels malgré leur disponibilité dans les équipements.

Par ailleurs, les fonctions classiquement rencontrées dans les réseaux internet fixes, plus simples et nettement moins coûteuses, sont absentes des réseaux d'accès mobiles, en particulier au niveau des goulots d'étranglement (i.e. au niveau des antennes ou stations de base). Il apparaît ainsi que la configuration décrite ci-dessus en relation avec la figure 1 se rencontre également au niveau des réseaux cellulaires connus, le nœud aval 101 représentant alors par exemple une antenne ou une station de base du réseau, et le nœud amont 100 une passerelle de réseau de données par paquets du type « P-GW » (pour « Packet Data Network Gateway » en anglais) ou une passerelle convergente fixe/mobile du type « C-GW » (pour « Convergent Gateway » en anglais).

Comme dans le cas des réseaux fixes, la plupart des logiciels applicatifs nécessitant un niveau de qualité de service maîtrisé dans les réseaux mobiles mettent en œuvre des mécanismes de bout en bout, par exemple via l'utilisation du protocole TCP.

Cependant, dans le cas des réseaux mobiles, la problématique de la fluctuation rapide du débit sur le lien radio vient s'ajouter à celle de la réduction du débit sur le dernier tronçon du réseau, i.e. entre le dernier nœud et l'utilisateur. Cette fluctuation dégrade nettement l'efficacité des solutions de bout en bout du type TCP qui se trouvent trop peu réactives.

Par exemple, le document de brevet US 2014/321275 A1 divulgue un procédé mis en œuvre dans un réseau afin d'améliorer la transmission des données.

Il existe donc un besoin pour une solution permettant aux opérateurs d'accès de gérer la qualité de service ressentie par un utilisateur d'une application recevant des paquets de données transitant par leur réseau.

Il existe également un besoin pour améliorer la qualité de service par rapport à celle obtenue via la mise en œuvre de solutions de bout en bout du type TCP.

## 3 RESUME

Dans un mode de réalisation de l'invention, il est proposé un procédé de traitement de paquets de données reçus par un équipement nœud de réseau dit amont et destinés à être transmis à un équipement terminal via un équipement nœud de réseau dit aval et via un lien de communication, ledit équipement nœud amont comprenant une file d'attente de paquets de données non prioritaires destinés audit équipement terminal, apte à stocker un nombre prédéterminé de paquets de données avant leur transmission à l'équipement nœud aval. Ledit procédé est mis en œuvre par ledit nœud amont et comprend les étapes suivantes :

- obtention d'une première information représentative d'un état de remplissage de ladite file d'attente de l'équipement nœud amont, sur une période d'observation prédéterminée ;
- quand ladite première information obtenue a une valeur indicative d'un niveau de remplissage de la file inférieure ou égale à un premier seuil bas non nul prédéterminé, réduction d'un débit de sortie de ladite file ;
- quand ladite première information obtenue a une valeur indicative d'un niveau de remplissage de la file supérieure à un premier seuil haut prédéterminé supérieur audit premier seuil bas, augmentation dudit débit de sortie de ladite file.

Ainsi, l'invention propose une solution nouvelle et inventive qui permet un contrôle de qualité de service ressentie par un utilisateur final, via le contrôle du débit de sortie des paquets émis par un nœud amont de réseau à destination de cet utilisateur final via un nœud aval.

Pour ce faire, l'invention prévoit que ce contrôle s'effectue au niveau de ce nœud amont. Cela permet au nœud amont de posséder des capacités de qualité de service permettant de gérer différentes files d'attente en fonction de l'importance des paquets à destination de l'utilisateur final.

L'invention permet de maintenir les files d'attente correspondantes non vides via le contrôle de leur débit de sortie. Ainsi, des arbitrages de priorité peuvent être fait entre le débit des différentes files d'attente en fonction de la priorité des paquets qu'elles contiennent, le débit des files d'attente des paquets non prioritaire étant réduit préférentiellement.

Lorsque plusieurs files d'attente sont utilisées pour gérer les paquets non prioritaires à destination de l'utilisateur final, par exemple si plus de deux niveaux de priorité sont présents dans ces paquets, alors le présent procédé peut aussi bien s'appliquer à chacune de ces files d'attente qu'à certaines d'entre elles.

Par ailleurs, l'utilisation de deux seuils distincts pour déterminer si le débit de sortie des paquets doit être diminué ou augmenté permet de s'affranchir, via un effet d'hystérésis, d'oscillations indésirables dans la valeur calculée de ce débit de sortie. Ceci permet également de lisser le débit ressenti par l'utilisateur final, et donc de moyenner les changements brutaux de débit qui peuvent se produire lorsque ce dernier utilise un terminal radio mobile par exemple.

Selon une caractéristique particulière, ladite première information représentative d'un d'état de remplissage de ladite file d'attente est obtenue à l'aide d'une méthode de gestion active de file d'attente.

Ainsi, l'état de remplissage des files d'attentes peut être déterminé via une méthode de gestion active de file d'attente bien connue de l'homme du métier pour son efficacité en la matière.

Selon une caractéristique particulière, ladite première information appartient au groupe comprenant :

- une estimation d'un temps de traversée de ladite file d'attente par un ou plusieurs paquets de données sur ladite période d'observation prédéterminée ;
- une estimation d'un niveau de remplissage de ladite file d'attente sur ladite période d'observation prédéterminée.

Ainsi, l'état de remplissage des files d'attentes est déterminé soit indirectement, via l'observation d'un temps de traversée dans la file d'attente, soit directement, via l'observation d'un niveau de remplissage.

Dans une mise en œuvre particulière, le procédé comprend en outre les sous-étapes suivantes :

- quand ladite première information obtenue a une valeur indicative d'un niveau de remplissage de la file supérieure audit premier seuil haut :

  ◦ obtention d'une seconde information représentative d'un instant présent ; et
  ◦ quand ladite seconde information obtenue est représentative d'un instant présent antérieur à une date préalablement déterminée, réduction ou maintien dudit débit de sortie de ladite file ;
  ◦ quand ladite seconde information obtenue est représentative d'un instant présent postérieur ou égal à ladite date préalablement déterminée, exécution de ladite étape d'augmentation du débit de sortie de ladite file.

Ainsi, dans cette mise en œuvre particulière, le débit de la file d'attente non prioritaire, une fois réduit par le procédé selon l'invention, ne peut ré-augmenter qu'après un certain laps de temps.

Selon une caractéristique particulière de l'invention, ledit débit de sortie de ladite file est fonction du débit des paquets entrants dans ladite file.

Ainsi, le débit de sortie de la file d'attente à laquelle on applique le procédé selon l'invention est calculé de manière à lui assurer un remplissage qui tend à être constant.

Selon un aspect particulier de l'invention, ledit débit des paquets entrants dans ladite file est fonction, via une méthode de gestion de la qualité de service de bout en bout, du débit de sortie dudit nœud aval.

Ainsi, le débit des paquets entrants dans la file d'attente est fonction du débit minimum dans le réseau, par exemple le débit de sortie du nœud aval. Ceci est possible lorsqu'une méthode de gestion de la qualité de service de bout en bout, par exemple du type TCP, est mise en œuvre. Une telle méthode adapte en effet, via des accusés de réception, le débit de la source au débit effectivement reçu par l'utilisateur final, et donc au débit minimum dans le réseau en pratique. Ainsi, le débit de sortie de la file d'attente à laquelle on applique le procédé selon l'invention étant par ailleurs asservi sur son débit entrant, ce débit de sortie se trouve alors asservi sur le débit minimum dans le réseau, en pratique le débit du dernier nœud avant l'utilisateur final.

Dans une première implémentation, ledit équipement nœud amont est un serveur d'accès large bande et ledit équipement nœud aval est un multiplexeur d'accès à la ligne d'abonné numérique.

Ainsi, dans cette première implémentation, le nœud amont est un nœud de réseau fixe possédant des fonctionnalités de qualité de service de manière à pouvoir gérer différentes files d'attente en fonction de la priorité des paquets de données à destination d'un utilisateur final, par exemple via des capacités de traitement OSI couche 3. Inversement, le nœud aval ne possède pas de telles fonctionnalités (les siennes se limitent par exemple aux capacités de traitement OSI couche 2). Ce nœud aval ne peut alors pas gérer différentes files d'attente.

Dans une deuxième implémentation, ledit équipement nœud amont est une passerelle de réseau de données par paquets ou une passerelle convergente et ledit équipement nœud aval est une antenne ou une station de base.

Ainsi, dans cette deuxième implémentation, le procédé s'applique à un nœud amont de réseau mobile possédant des fonctionnalités de qualité de service de manière à pouvoir gérer différentes files d'attente en fonction de la priorité des paquets de données à destination d'un utilisateur final, par exemple via des capacités de traitement OSI couche 3. Inversement, le nœud aval ne possède pas de telles fonctionnalités (les siennes se limitent par exemple aux capacités de traitement OSI couche 2) et ne peut donc pas gérer différentes files d'attente.

Dans un autre mode de réalisation de l'invention, il est proposé un programme d'ordinateur, comprenant des instructions de code de programme pour la mise en œuvre d'un procédé tel que décrit précédemment, dans l'un quelconque de ses différents modes de réalisation, lorsque ledit programme est exécuté sur un ordinateur.

Dans un autre mode de réalisation de l'invention, il est proposé un médium de stockage lisible par ordinateur et non transitoire, stockant un programme d'ordinateur comprenant des instructions de code de programme pour la mise en œuvre d'un procédé tel que décrit précédemment, selon l'un quelconque de ses différents modes de réalisation.

Dans un autre mode de réalisation de l'invention, il est proposé un dispositif de traitement, configuré pour mettre en œuvre un procédé de traitement de paquets de données reçus par un équipement nœud de réseau dit amont et destinés à être transmis à un équipement terminal par un équipement nœud de réseau dit aval via un lien de communication, ledit équipement nœud amont comprenant une file d'attente de paquets de données non prioritaires destinés audit équipement terminal, apte à stocker un nombre prédéterminé de paquets de données avant leur transmission à l'équipement nœud aval. Le dispositif comprend une machine de calcul reprogrammable configurée pour ou une machine de calcul dédiée configurée pour :

- obtenir une première information représentative d'un état de remplissage de ladite file d'attente de l'équipement nœud amont, sur une période d'observation prédéterminée ;
- réduire un débit de sortie de ladite file quand ladite première information obtenue a une valeur indicative d'un niveau de remplissage de la file inférieure ou égale à un premier seuil bas non nul prédéterminé ;
- augmenter ledit débit de sortie de ladite file quand ladite première information obtenue a une valeur indicative d'un niveau de remplissage de la file supérieure à un premier seuil haut prédéterminé supérieur audit premier seuil bas.

Ainsi, il est également proposé un dispositif de traitement apte à mettre en œuvre le procédé de traitement de paquets de données selon l'invention (selon l'un quelconque des différents modes de réalisation précités).

Dans un autre mode de réalisation de l'invention, il est proposé un équipement nœud de réseau, dit nœud amont, configuré pour mettre en œuvre un procédé de traitement de paquets de données tel que décrit précédemment, selon l'un quelconque de ses différents modes de réalisation, le nœud amont comprenant un dispositif de traitement tel que décrit ci-dessus.

Ainsi, il est également proposé un nœud de réseau apte à mettre en œuvre le procédé de traitement de paquets de données selon l'invention (selon l'un quelconque des différents modes de réalisation précités).

## 4 LISTE DES FIGURES

D'autres caractéristiques et avantages apparaîtront plus clairement à la lecture de la description suivante de modes de réalisation particuliers de la divulgation, donnés à titre de simples exemples illustratifs et non limitatifs, et des dessins annexés, parmi lesquels :

- la figure 1 représente le trafic de paquets destinés à un utilisateur dans une configuration de réseau de l'art antérieur ;
- la figure 2a illustre les étapes d'un procédé obtenu par adaptation de l'état de la techinque
- la figure 2b illustre les étapes d'un procédé de traitement de paquets de données selon différents modes de réalisation de l'invention ;
- les figures 2c et 2d illustrent des paramètres intervenant dans la mise en œuvre du procédé de traitement de paquets de données en relation avec les figures 2a et 2b ;
- les figures 3a et 3b illustrent les effets d'un procédé de traitement de paquets de données sur le remplissage des files d'attente des nœuds de réseau selon des modes de réalisation particuliers de l'invention ;
- la figure 4 illustre les effets d'un procédé de traitement de paquets de données sur le trafic entre les nœuds de réseau selon un mode de réalisation particulier de l'invention ; et
- la figure 5 présente un exemple de structure d'un dispositif de traitement permettant la mise en œuvre du procédé de la figure 2.

## 5 DESCRIPTION DETAILLEE

Sur toutes les figures du présent document, les éléments et étapes identiques sont désignés par une même référence.

Le principe général de la technique décrite consiste à réduire volontairement le débit sur un nœud de réseau possédant des capacités à prioriser certains flux par rapport à d'autres considérés comme moins cruciaux. Plus précisément, la technique décrite propose d'asservir le débit sortant des paquets émis par ce nœud, sur leur débit entrant. Ce débit entrant étant lui-même asservi sur le débit d'un nœud aval, par exemple le nœud aval ayant le plus bas débit dans le réseau et transmettant les paquets à l'utilisateur final, via une méthode de gestion de la qualité de service de bout en bout. De la sorte, le nœud amont se voit devenir le goulot d'étranglement, en termes de débit, pour la transmission des paquets de donnée à destination de l'utilisateur final en question. Il en résulte que les files d'attentes de ce nœud amont se remplissent et qu'une régulation du débit relatif de ces différentes files peut alors se faire. La priorisation de certains flux par rapport à d'autres peut alors devenir effective, par exemple en réduisant prioritairement le flux des paquets considérés comme ayant la plus faible priorité.

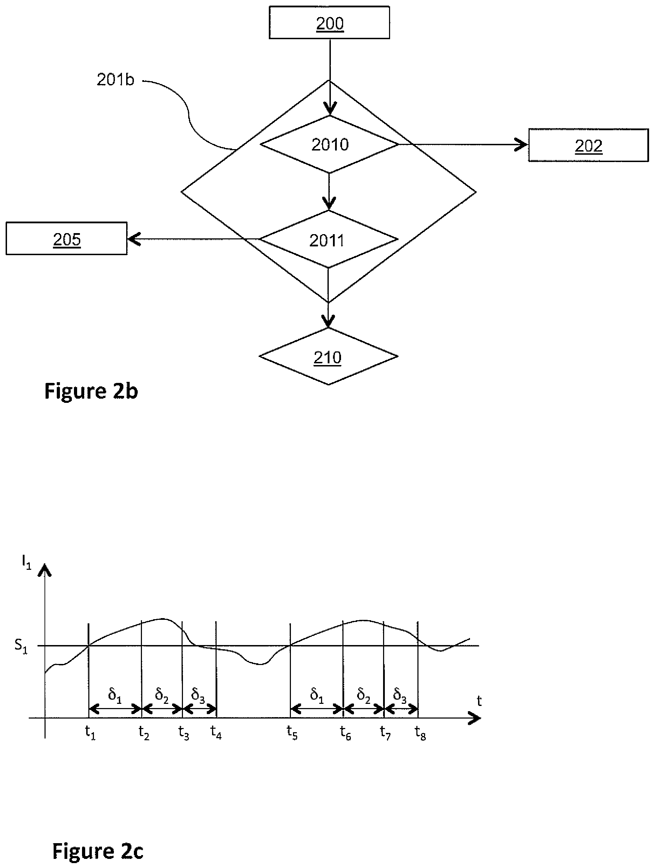

On décrit avec les **figures 2a et 2c**, un un procédé de traitement de paquets de données selon l'invention.

Le débit d'au moins une file d'attente de paquets de données non prioritaires d'un nœud du réseau est calculé en utilisant un algorithme de gestion active de file d'attente de type AQM (pour « Active Queue Management » en anglais) modifié.

En effet, certains algorithmes de gestion active de file d'attente selon les techniques antérieures permettent de contrôler les délais d'attente des paquets dans la file considérée, en détruisant certains d'entre eux lorsque ces délais s'allongent trop. Plus précisément, lorsque l'attente augmente, ces algorithmes déterminent si des actions de destruction de paquets sont requises et quels sont les paquets à détruire.

Différents types d'algorithmes de gestion active de file d'attente existent et sont bien connus de l'homme du métier. A titre d'exemple, on peut citer l'algorithme PIE (pour « Proportional Integral controller Enhanced » en anglais) tel que présenté dans le document de Rong Pan, Preethi Natarajan, Chiara Piglione, Mythili Suryanarayana Prabhu, Vijay Subramanian, Fred Baker et Bill VerSteeg: « PIE: A lightweight control scheme to address the bufferbloat problem » (IEEE International Conférence on High Performance Switching and Routing 2013, p148-155) ou bien encore l'algorithme CoDel (pour « Controlled DELay management » en anglais) tel que présenté dans le document de Kathleen M. Nichols et Van Jacobson: « Controlling Queue Delay » (ACM Queue, Vol. 10 Issue 5, May 2012).

Dans la figure 2a, de tels algorithmes peuvent être utilisés non pas pour décider si des paquets doivent être détruits, mais pour décider si le débit de la file d'attente doit être réduit ou augmenté. Plus particulièrement, le mode de réalisation présenté en rapport avec la figure 2a est basé sur l'utilisation d'un algorithme du type Co-Del.

Ainsi, dans une première étape 200 un paquet est retiré d'une file d'attente d'un nœud dit amont pour être envoyé à un nœud dit aval dans le réseau.

À ce moment là, lors d'une étape 201a une première information $I_1$ représentative de l'état de remplissage de cette file d'attente est comparée à un premier seuil $S_1$.

Cette première information $I_1$ peut être par exemple une estimation du temps de traversée de cette file d'attente par le paquet qui vient d'être retiré. Ce peut être également une estimation d'un temps de traversée de cette file d'attente par tout autre paquet ayant déjà été retiré de la file d'attente. On peut encore imaginer que ce soit un temps de traversée moyen estimé sur tout ou partie des paquets retirés de la file d'attente pendant une période temporelle donnée ou encore toute autre statistique basée sur les temps de traversée de ces paquets. Par temps de traversée d'un paquet, il est entendu ici la différence de temps entre l'instant d'arrivée de ce paquet dans la file d'attente (obtenue via un horodatage par exemple), et l'instant de retrait du même paquet de la même file.

Alternativement, cette première information $I_1$ peut correspondre à une estimation du niveau de remplissage de la file d'attente (par exemple le niveau moyen, le niveau minimum, le niveau maximum, ou toute autre statistique sur le remplissage de la file), sur une période d'observation prédéterminée.

Dans un exemple d'implémentation, une valeur de seuil $S_1$ correspondant à un temps de traversée de 15ms est utilisée, ce qui est compatible avec la plupart des files d'attentes utilisées.

Si lors de l'étape 201a la valeur de cette première information $I_1$ est inférieure ou égale au premier seuil prédéterminé $S_1$, alors une étape 202 est exécutée lors de laquelle un indice k est remis à une valeur initiale $k_0$. Cet indice est par ailleurs utilisé lors des étapes 211 et 212 décrites ci-après. Cette étape 202 est alors suivie de l'étape 203 lors de laquelle le débit de sortie de la file d'attente est réduit. À titre d'exemple cette réduction peut prendre la forme d'un calcul du débit de sortie $C_n$ à appliquer à la file après l'itération n de l'algorithme, en fonction du débit de sortie $C_{n-1}$ appliqué avant cette itération. En d'autres termes, une fonction g lie le débit de sortie des paquets de la file avant, i.e. $C_{n-1}$, et après, i.e. $C_n$, le passage par l'étape 202. Cette fonction g permet alors de définir une loi de progression de ce débit de sortie des paquets de la file d'attente lors de la réduction de celui-ci. A titre d'exemple, cette réduction de débit peut se faire de manière linéaire, polynomiale, exponentielle, etc.

Ainsi, si la première information $I_1$ est inférieure ou égale au premier seuil $S_1$, i.e. si le temps de traversée dans la file est trop faible, l'algorithme va tendre à baisser le débit de sortie calculé de la file dans le but de remplir cette dernière.

Inversement, si lors de l'étape 201a la valeur de la première information est supérieure au premier seuil prédéterminé, l'algorithme passe à l'étape 210 lors de laquelle une deuxième information est comparée à un second seuil variable $S_2$. Selon le présent mode de réalisation, cette deuxième information est représentative de l'instant présent au moment de l'exécution de l'étape 210 et le second seuil correspond à une valeur initiale de date ou alors à une date déterminée lors d'un précédent passage à l'étape 212.

Si lors de l'étape 210 la valeur de cette seconde information est supérieure ou égale au second seuil $S_2$, l'algorithme passe à l'étape 211 lors de laquelle l'indice entier k est incrémenté, par exemple, de une unité.

L'étape 211 d'incrémentation de l'indice k est alors suivie de l'étape 212 lors de laquelle la valeur du second seuil $S_2$ est mise à jour. A titre d'exemple, ce second seuil $S_2$ est déterminé sur la base d'un algorithme CoDel modifié. Plus précisément, ce second seuil peut être déterminé en fonction de l'instant présent $t_p$ au moment de l'exécution de l'étape 212, d'une valeur constante représentative d'un intervalle temporel, *Inter*, et de l'indice k décrit ci-dessus en relation avec l'étape 211. Dans le présent mode de réalisation le second seuil $S_2$ peut s'exprimer sous forme d'une somme, e.g. $t_p + \delta$ avec

$$\delta = Inter / \sqrt{k}.$$

L'étape 212 de détermination du second seuil $S_2$ est alors suivie de l'étape 213 lors de laquelle le débit de sortie de la file d'attente est augmenté. Tout comme pour la réduction de débit décrite ci-dessus en rapport avec l'étape 203, le débit de sortie $C_n$ à appliquer à la file après l'itération n de l'algorithme, peut s'exprimer comme la fonction f du débit de sortie $C_{n-1}$ appliqué avant cette itération. Là encore, la fonction f (de type linéaire, polynomial ou exponentiel par exemple) permet de définir une loi de progression de ce débit de retrait des paquets de la file d'attente lors de l'augmentation de celui-ci.

Inversement, si lors de l'étape 210 la valeur de cette seconde information est inférieure au second seuil $S_2$, l'algorithme passe à l'étape 204 lors de laquelle le débit de sortie de la file d'attente est réduit. Dans une variante, ce débit peut être simplement maintenu lors du passage à l'étape 204. Ceci dans le but de ne pas voir la file d'attente se remplir encore plus alors que le test effectué à l'étape 201a est déjà positif.

Dans l'exemple illustré sur la figure 2c, c'est à l'instant $t_1$ que la première information $I_1$ devient pour la première fois supérieure au premier seuil $S_1$ (i.e. que le temps de traversée dans la file devient trop important). A cet instant $t_1$, le test effectué à l'étape 201a est positif et l'étape 210 est exécutée pour la première fois. Lors de l'exécution de cette étape 210, le second seuil $S_2$ prend une valeur initiale qui s'écrit : $S_2 = t_1 + \delta_1$ avec $t_1$

$$\delta_1 = Inter / \sqrt{k_0}$$

$= t_p$ et (où $k_0$ *est* la valeur initiale de l'indice k déterminée à l'étape 202). L'instant $t_1$ est ici assimilé à l'instant $t_p$ d'exécution de l'étape 212, en considérant négligeables les délais d'exécution des étapes du procédé.

Plus tard (instant $t_2$), lorsque la seconde information (représentative de l'instant présent au moment de l'exécution de l'étape 210) devient supérieure ou égale au second seuil $S_2 = t_1 + \delta_1$, la première information $I_1$ est encore supérieure au premier seuil $S_1$. Les étapes 211 à 213 (conduisant à une première réduction du débit de sortie de la file d'attente) sont alors exécutées pour la première fois. En particulier, une nouvelle valeur du second seuil $S_2$ (destinée à être utilisée lors de la prochaine exécution de l'étape 210) est calculée lors de la première exécution de l'étape 212, à l'instant $t_p$, et s'écrit :

$S_2 = t_2 + \delta_2$ avec $t_2 = t_p$ et $\delta_2 = Inter / \sqrt{k_0 + 1}$.

Encore plus tard (instant $t_3$), lorsque la seconde information (représentative de l'instant présent au moment de l'exécution de l'étape 210) devient supérieure ou égale au second seuil $S_2 = t_2 + \delta_2$, la première information $I_1$ est encore supérieure au premier seuil $S_1$. Les étapes 211 à 213 (conduisant à une seconde réduction du débit de sortie de la file d'attente) sont alors exécutées pour la seconde fois. En particulier, une nouvelle valeur de $S_2$ est calculée lors de cette seconde exécution de l'étape 212, à l'instant $t_p$, et s'écrit : $S_2 = t_3 + \delta_3$ avec $t_2 = t_p$ et $\delta_3 = Inter / \sqrt{k_0 + 2}$.

Encore plus tard (instant $t_4$), lorsque la seconde information (représentative de l'instant présent au moment de l'exécution de l'étape 210) devient supérieure ou égale au second seuil $S_2 = t_3 + \delta_3$, la première information $I_1$ est maintenant inférieure ou égale au premier seuil $S_1$. Les étapes 211 à 213 ne sont pas exécutées une troisième fois dans ce cas. A la place, les étapes 202 et 203 sont maintenant exécutées, conduisant d'une part à la mise à la valeur initiale $k_0$ de l'indice k, et d'autre part à une réduction du débit de la file d'attente contrôlée.

Il faut alors attendre l'instant $t_5$ pour que la première information $I_1$ devienne à nouveau supérieure au premier seuil $S_1$, conduisant par là-même à une nouvelle exécution de l'étape 210. Cependant, la valeur de l'indice k ayant été remise à la valeur initiale $k_0$, le second seuil $S_2$ s'écrit alors : $S_2 = t_5 + \delta_1$ avec $t_5 = t_p$ et

$$\delta_1 = Inter / \sqrt{k_0}.$$

Il apparaît alors que les conditions se trouvent être les mêmes pour les deux exécutions suivantes des étapes 211 à 213, conduisant chacune à une réduction du débit de la file d'attente aux instants $t_6 = t_5 + \delta_1$ et $t_7$ $= t_6 + \delta_2$, que celles rencontrées lors de l'exécution de ces étapes aux instants $t_2 = t_1 + \delta_1$ et $t_3 = t_2 + \delta_2$.

Plus tard (instant $t_8$), la première information $I_1$ est encore supérieure au premier seuil $S_1$ lorsque la seconde information (représentative de l'instant présent au moment de l'exécution de l'étape 210) devient supérieure ou égale au second seuil $S_2 = t_7 + \delta_3$. Ainsi, les étapes 211 à 213, conduisant à une réduction du débit de sortie de la file d'attente contrôlée, sont exécutées une nouvelle fois à l'instant $t_8$, ce qui n'était pas le cas précédemment lorsqu'arrivé à l'instant $t_4$.

Ainsi, de par l'enchaînement des étapes décrites ci-dessus, on voit que même si la première information $I_1$ est supérieure au premier seuil $S_1$, i.e. si le temps de traversée dans la file devient trop important, l'algorithme ne va augmenter le débit que si la seconde information représentative de l'instant présent au moment de l'exécution de l'étape 210 est supérieure ou égale au second seuil $S_2$, i.e. que s'il s'est écoulé suffisamment de temps depuis l'augmentation de débit précédente. De la sorte, tout phénomène d'oscillation rapide du débit autour d'une valeur d'équilibre est impossible. Inversement, quand bien même le but de l'algorithme reste la réduction du débit effectif de la file d'attente par rapport à son débit physique dans le but de se caler sur le débit le plus faible dans le réseau, l'algorithme permet tout de même d'augmenter à nouveau ce débit de sortie pour s'adapter aux variations de ce débit minimum. Cette augmentation n'est bien sûr possible que dans la limite du débit physique de la file qui reste la limite supérieure possible pour ce débit de sortie.

Selon ce mode de réalisation d'un procédé selon l'invention, on voit que le débit de la file d'attente est calculé de manière à ce que le niveau de remplissage de cette dernière tende à être constant. Ainsi, une fois le point d'équilibre atteint, le débit de sortie calculé par l'algorithme tend à être égal au débit de paquets entrants dans la file. Cependant, dans une application ou un protocole de gestion de qualité de service de bout en bout, par exemple du type TCP, est présent, il apparaît que ce débit de paquets entrants correspond, après une période d'adaptation, au débit minimum du réseau. En effet, un tel protocole de bout en bout tend à faire correspondre le débit de la source des paquets à celui effectivement reçu par le destinataire. Ainsi, l'algorithme décrit en relation avec la figure 2a permet de répliquer ce débit minimum du réseau au niveau de la file d'attente du nœud à laquelle il est appliqué.

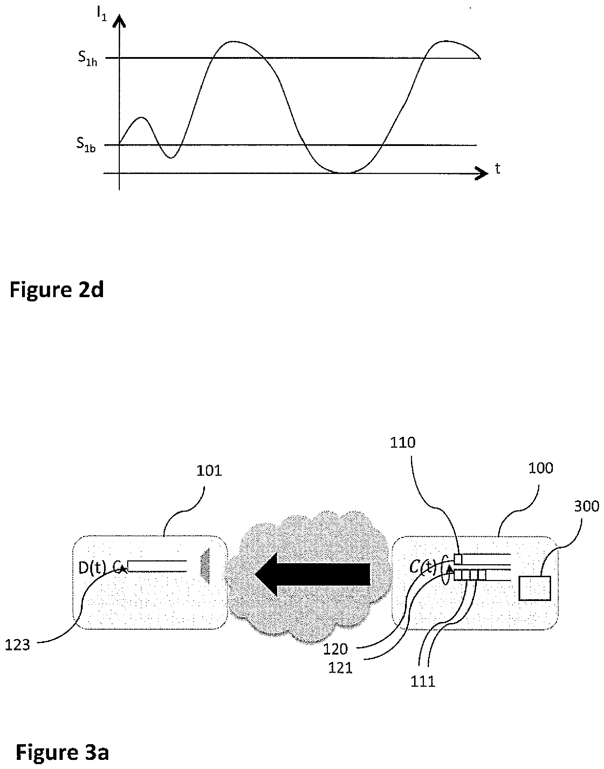

On décrit maintenant, en relation avec les **figures 2b et 2d**, une variante de réalisation du procédé de traitement de paquets de données selon l'invention. Dans cette variante, lors d'une étape 201b, la première information $I_1$ représentative de l'état de remplissage de la file d'attente est comparée non pas à un seul premier seuil, comme lors de l'étape 201a décrite en relation avec la figure 2a, mais à un premier seuil haut $S_{1h}$ ainsi qu'à un premier seuil bas $S_{1b}$. Dans une implémentation particulière, la valeur de seuil bas $S_{1b}$ correspond à un temps de traversée de 5ms, ce qui est compatible avec la plupart des files d'attentes utilisées. De même, il est envisageable d'avoir une valeur de seuil haut $S_{1h}$ correspondant à un temps de traversée de 20ms.

Plus précisément, lors d'une sous-étape 2010 la première information $I_1$ est comparée à un premier seuil bas prédéterminé $S_{1b}$. Si la valeur de cette première information $I_1$ est inférieure ou égale au premier seuil bas prédéterminé $S_{1b}$, alors l'étape 202 décrite en relation avec la figure 2a est exécutée.

Inversement, si la valeur de la première information $I_1$ est supérieure au premier seuil bas prédéterminé $S_{1b}$, alors, lors d'une sous-étape 2011, la première information $I_1$ est comparée à un premier seuil haut prédéterminé $S_{1h}$, ce premier seuil haut étant supérieur ou égal au premier seuil bas $S_{1b}$. Si la valeur de la première information $I_1$ est supérieure au premier seuil haut prédéterminé $S_{1h}$, l'étape 210 décrite en relation avec la figure 2a est exécutée. Inversement, si la valeur de la première information $I_1$ est inférieure ou égale au premier seuil haut prédéterminé $S_{1h}$, alors le débit de sortie de la file d'attente est maintenu constant lors d'une étape 205. Ainsi, le débit de sortie est maintenu constant sur l'ensemble d'une plage de valeurs de la première information représentative de l'état de remplissage de la file d'attente. La valeur calculée du débit se trouve alors modifiée moins souvent. Le débit de sortie de la file d'attente est ainsi plus stable dans ce mode de réalisation.

Dans cette variante, les autres étapes du procédé de traitement de paquets de données selon l'invention correspondent aux étapes décrites ci-dessus en relation avec la figure 2a.

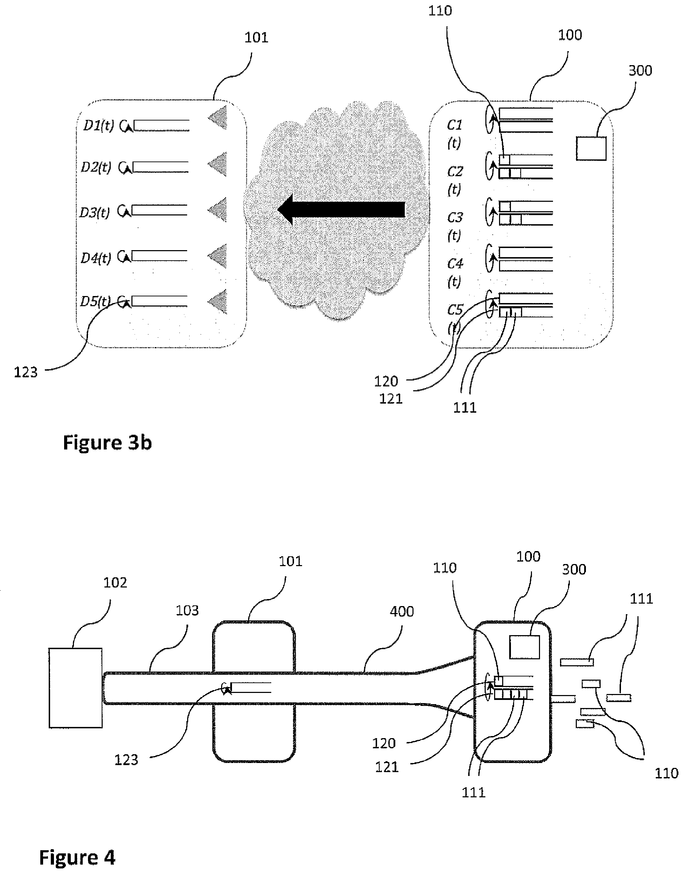

On décrit maintenant en rapport avec les **figures 3a et 3b** les effets d'un procédé de traitement de paquets de données sur le remplissage des files d'attente d'un nœud de réseau selon des modes de réalisation particuliers de l'invention.

Plus particulièrement, la figure 3a représente un nœud aval 101 ne disposant pas de fonctionnalités de gestion de la qualité de service, comme présenté en relation avec la figure 1 concernant la configuration du type connu. Ce nœud ne gère donc qu'une seule file d'attente pour tous les paquets à destination d'un même destinataire, quelle que soit la priorité de ces paquets. A contrario, selon ce mode de réalisation, le nœud de réseau amont 100 dispose de telles fonctionnalités de gestion de la qualité de service. Par exemple, il peut s'agir d'un équipement d'accès au service faisant partie d'un réseau fixe, ou bien d'une passerelle de réseau de données par paquets ou d'une passerelle convergente fixe/mobile dans le cas d'un réseau cellulaire. Comme présenté en relation avec la figure 1, ce nœud amont est alors apte à gérer plusieurs files d'attentes dans le but de gérer les paquets à destination du même destinataire en fonction d'un critère de priorité, par exemple le marquage DSCP de leur en-tête si ce sont des paquets issus du protocole internet. Plus précisément, selon ce mode de réalisation une file d'attente 120 est dédiée à la gestion des paquets de priorité haute 110, et une file d'attente 121 à la gestion des paquets de priorité plus basse 111.

Même si le nœud amont à un débit physique supérieur à celui du nœud aval auquel les paquets de données 110, 111 doivent parvenir, il apparaît que l'application, par un dispositif de traitement 300 du nœud amont 100, du procédé selon l'invention à au moins une des files d'attente des paquets non prioritaires du nœud amont permet de recréer un engorgement dans au moins cette file via la réduction de son débit. Il apparaît alors que ce nœud amont devient le facteur limitant dans la transmission des paquets de données, ce qui conduit à avoir la file d'attente du nœud aval qui se vide.

Plus précisément, si le procédé est appliqué uniquement à la file d'attente 121 du nœud amont dédiée à la gestion des paquets de priorité plus basse, il apparaît que le débit de la file d'attente dédiée à la gestion des paquets de priorité haute est préservée. Ainsi ce débit de la file d'attente du nœud amont dédiée à la gestion des paquets de priorité haute reste à la valeur de son débit physique, alors que le débit de la file d'attente du nœud amont dédiée à la gestion des paquets de priorité plus basse est réduit par rapport à ce même débit physique. On voit ainsi que les paquets de priorité haute sont émis par le nœud amont plus rapidement que les paquets de priorité plus basse et que ces mêmes paquets de priorité haute ne risquent plus d'être rejetés par le nœud aval car la file d'attente de ce dernier se trouve vidée. Ceci conduit bien à améliorer la qualité de service perçue par l'utilisateur final.

Selon le mode de réalisation représenté sur la figure 3b, le procédé selon l'invention peut s'appliquer lorsque plusieurs utilisateurs sont en attente de paquets de données transitant via les nœuds amont 100 et aval 101. Selon ce mode de réalisation, chaque file d'attente du nœud aval est dédiée à la gestion des paquets destinés à un utilisateur particulier. Le nœud amont présente alors des files d'attentes correspondantes pour les paquets de priorité haute ou plus basse pour chaque utilisateur. Selon ce mode de réalisation, le procédé est alors appliqué par le dispositif de traitement 300, à chaque file d'attente du nœud amont dédiée à la gestion des paquets de priorité plus basse de chaque utilisateur. Comme dans le cas d'une transmission simple illustrée sur la figure 3a, il apparaît que l'application du procédé recrée un engorgement sur chaque file sur laquelle il est appliqué, conduisant par là-même à avoir la file d'attente correspondante qui se vide au niveau du nœud aval. Les paquets de priorité haute se trouvant ainsi favorisés en termes de délai et les files d'attente du nœud aval étant vidées, la qualité de service s'en trouve améliorée pour chaque utilisateur.

On décrit maintenant plus en détail l'implantation du procédé selon l'invention dans un réseau de transmission de données en relation avec la **figure 4.** Dans ce mode de réalisation, un procédé selon l'invention est mis en œuvre dans le dispositif de traitement 300 du nœud amont 100 d'un réseau qui implémente des fonctionnalités de gestion de la qualité de service. Comme dans la configuration connue décrite en relation avec la figure 1, il peut s'agir par exemple d'un équipement d'accès au service implémentant de telles fonctionnalités de gestion sur la base du marquage DSCP de l'en-tête des paquets transmis s'il s'agit d'un réseau implémentant le protocole internet. Il peut également s'agir d'une passerelle de réseau de données par paquets du type « P-GW » ou d'une passerelle convergente fixe/mobile dans le cas de réseaux cellulaires.

A contrario, le nœud aval 101 est dépourvu de telles fonctionnalités de gestion de la qualité de service. Il peut s'agir par exemple d'un multiplexeur d'accès à la ligne d'abonné numérique d'ancienne génération ou d'un équipement de certaines stations radio de faisceaux hertziens dans le cas d'un réseau fixe. Il peut également s'agir d'une antenne ou d'une station de base dans le cas de réseaux cellulaires.

Que ce soit dans le cas d'un réseau fixe ou dans le cas d'un réseau cellulaire, il apparaît que l'application d'un procédé selon l'invention au niveau des files d'attente du nœud amont permet de réduire le débit 400 en sortie de ce nœud 100, de manière à ce qu'il tende à coïncider avec le débit de sortie 103 du nœud aval 101.

Par ailleurs, l'application de ce procédé aux files d'attente 121 du nœud amont dédiées à la gestion des paquets de priorité plus basse 111 permet de réduire le débit d'émission de ces paquets par rapport au débit d'émission des paquets de priorité haute, contribuant ainsi à l'amélioration de la qualité de service ressentie par l'utilisateur final.

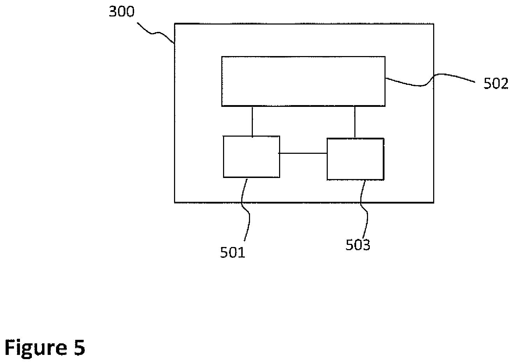

La **figure 5** présente enfin un exemple de structure du dispositif de traitement 300, permettant la mise en œuvre du procédé de la figure 2b.

Le dispositif de traitement 300 comprend une mémoire vive 503 (par exemple une mémoire RAM), une unité de traitement 502, équipée par exemple d'un processeur, et pilotée par un programme d'ordinateur stocké dans une mémoire morte 501 (par exemple une mémoire ROM ou un disque dur). A l'initialisation, les instructions de code du programme d'ordinateur sont par exemple chargées dans la mémoire vive 503 avant d'être exécutées par le processeur de l'unité de traitement 502.

Cette figure 5 illustre seulement une manière particulière, parmi plusieurs possibles, de réaliser l'algorithme détaillé ci-dessus, en relation avec la figure 2. En effet, la technique de l'invention se réalise indifféremment sur une machine de calcul reprogrammable (un ordinateur PC, un processeur DSP ou un microcontrôleur) exécutant un programme comprenant une séquence d'instructions, ou sur une machine de calcul dédiée (par exemple un ensemble de portes logiques comme un FPGA ou un ASIC, ou tout autre module matériel).

Dans le cas où l'invention est implantée sur une machine de calcul reprogrammable, le programme correspondant (c'est-à-dire la séquence d'instructions) pourra être stocké dans un médium de stockage amovible (tel que par exemple une disquette, un CD-ROM ou un DVD-ROM) ou non, ce médium de stockage étant lisible partiellement ou totalement par un ordinateur ou un processeur.

## Revendications

1. Procédé de traitement de paquets de données reçus par un équipement nœud de réseau dit amont (100) et destinés à être transmis à un équipement terminal (102) via un équipement nœud de réseau dit aval (101) et via un lien de communication, ledit équipement nœud amont comprenant une file d'attente (121) de paquets de données non prioritaires (111) destinés audit équipement terminal, apte à stocker un nombre prédéterminé de paquets de données avant leur transmission à l'équipement nœud aval, ledit procédé étant **caractérisé en ce qu'**il est mis en œuvre par ledit nœud amont et **en ce qu'**il comprend les étapes suivantes :

   • obtention (201a, 201b) d'une première information représentative d'un état de remplissage de ladite file d'attente de l'équipement nœud amont, sur une période d'observation prédéterminée ;
   • quand ladite première information obtenue a une valeur indicative d'un niveau de remplissage de la file inférieur ou égal à un premier seuil bas non nul prédéterminé, réduction (203) d'un débit de sortie de ladite file ;
   • quand ladite première information obtenue a une valeur indicative d'un niveau de remplissage de la file supérieur à un premier seuil haut prédéterminé supérieur audit premier seuil bas, augmentation (213) dudit débit de sortie de ladite file.

2. Procédé selon la revendication 1, dans lequel ladite première information représentative d'un d'état de remplissage de ladite file d'attente est obtenue à l'aide d'une méthode de gestion active de file d'attente.

3. Procédé selon l'une quelconque des revendications 1 ou 2, dans lequel ladite première information appartient au groupe comprenant :

   • une estimation d'un temps de traversée de ladite file d'attente par un ou plusieurs paquets de données sur ladite période d'observation prédéterminée ;
   • une estimation d'un niveau de remplissage de ladite file d'attente sur ladite période d'observation prédéterminée.

4. Procédé selon l'une quelconque des revendications 1 à 3, comprenant en outre les sous-étapes suivantes :

• quand ladite première information obtenue a une valeur indicative d'un niveau de remplissage de la file supérieure audit premier seuil haut :

◦ obtention (210) d'une seconde information représentative d'un instant présent ; et
◦ quand ladite seconde information obtenue est représentative d'un instant présent antérieur à une date préalablement déterminée, réduction ou maintien (204) dudit débit de sortie de ladite file ;
◦ quand ladite seconde information obtenue est représentative d'un instant présent postérieur ou égal à ladite date préalablement déterminée, exécution de ladite étape d'augmentation (213) du débit de sortie de ladite file.

**5.** Procédé selon l'une quelconque des revendications 1 à 4, dans lequel ledit équipement nœud amont est un serveur d'accès large bande et ledit équipement nœud aval est un multiplexeur d'accès à la ligne d'abonné numérique.

**6.** Procédé selon l'une quelconque des revendications 1 à 4, dans lequel ledit équipement nœud amont est une passerelle de réseau de données par paquets ou une passerelle convergente et ledit équipement nœud aval est une antenne ou une station de base.

**7.** Produit programme d'ordinateur, comprenant des instructions de code de programme pour la mise en œuvre d'un procédé selon l'une quelconque des revendications 1 à 6, lorsque ledit programme est exécuté sur un ordinateur.

**8.** Médium de stockage lisible par ordinateur et non transitoire, stockant un produit programme d'ordinateur selon la revendication 7.

**9.** Dispositif de traitement (300), configuré pour mettre en œuvre un procédé de traitement de paquets de données reçus par un équipement nœud de réseau dit amont (100) et destinés à être transmis à un équipement terminal (102) via un équipement nœud de réseau dit aval (101) et via un lien de communication, ledit équipement nœud amont comprenant une file d'attente (121) de paquets de données non prioritaires (111) destinés audit équipement terminal, apte à stocker un nombre prédéterminé de paquets de données avant leur transmission à l'équipement nœud aval, ledit dispositif étant **caractérisé en ce qu'**il comprend une machine de calcul reprogrammable (502) configurée pour ou une machine de calcul dédiée configurée pour :

• obtenir une première information représentative d'un état de remplissage de ladite file d'attente de l'équipement nœud amont, sur une période d'observation prédéterminée ;
• réduire un débit de sortie de ladite file quand ladite première information obtenue a une valeur indicative d'un niveau de remplissage de la file inférieur ou égal à un premier seuil bas non nul prédéterminé ;
• augmenter ledit débit de sortie de ladite file quand ladite première information obtenue a une valeur indicative d'un niveau de remplissage de la file supérieur à un premier seuil haut prédéterminé supérieur audit premier seuil bas.

**10.** Equipement nœud de réseau, dit nœud amont (100), apte à transmettre des paquets de données à un équipement terminal via un équipement de réseau, dit nœud aval, et via un lien de communication, le nœud amont étant **caractérisé en ce qu'**il comprend un dispositif de traitement (300) selon la revendication 9.

**Patentansprüche**

**1.** Verfahren zur Verarbeitung von Datenpaketen, die von einer stromaufwärtigen Netzknoteneinrichtung (100) empfangen werden und dazu bestimmt sind, über eine stromabwärtige Netzknoteneinrichtung (101) und über eine Kommunikationsverbindung an ein Endgerät (102) übertragen zu werden, wobei die stromaufwärtige Knoteneinrichtung eine Warteschlange (121) für nicht vorrangige Datenpakete (111) umfasst, die für das Endgerät bestimmt sind, die geeignet ist, eine vorbestimmte Anzahl von Datenpaketen vor deren Übertragung an die stromabwärtige Knoteneinrichtung zu speichern, wobei das Verfahren **dadurch gekennzeichnet ist, dass** es von dem stromaufwärtigen Knoten durchgeführt wird, und dadurch, dass es die folgenden Schritte umfasst:

• Beziehen (201a, 201b) einer ersten Information, die für einen Füllzustand der Warteschlange der stromaufwärtigen Knoteneinrichtung über einen vorbestimmten Beobachtungszeitraum repräsentativ ist;
• wenn die bezogene erste Information einen Wert aufweist, der einen Füllstand der Schlange unter oder gleich einer vorbestimmten ersten unteren Schwelle ungleich null angibt, Verringern (203) eines Ausgabedurchsatzes der Schlange;
• wenn die bezogene erste Information einen Wert aufweist, der einen Füllstand der Schlange über einer vorbestimmten ersten oberen Schwelle angibt, die über der ersten unteren Schwelle liegt, Erhöhen (213) des Ausgabedurchsatzes der Schlange.

2. Verfahren nach Anspruch 1, wobei die erste Information, die für einen Füllzustand der Warteschlange repräsentativ ist, mithilfe eines aktiven Warteschlangen-Verwaltungsverfahrens bezogen wird.

3. Verfahren nach einem der Ansprüche 1 oder 2, wobei die erste Information zu der Gruppe gehört, die Folgendes umfasst:

    • eine Schätzung einer Durchlaufzeit der Warteschlange von einem oder mehreren Datenpaketen über den vorbestimmten Beobachtungszeitraum;
    • eine Schätzung eines Füllstands der Warteschlange über den vorbestimmten Beobachtungszeitraum.

4. Verfahren nach einem der Ansprüche 1 bis 3, ferner umfassend die folgenden Unterschritte:

    • wenn die bezogene erste Information einen Wert aufweist, der einen Füllstand der Schlange über der ersten oberen Schwelle angibt:

        o Beziehen (210) einer zweiten Information, die für einen gegenwärtigen Zeitpunkt repräsentativ ist; und
        o wenn die bezogene zweite Information für einen gegenwärtigen Zeitpunkt vor einem zuvor bestimmten Datum repräsentativ ist, Verringern oder Beibehalten (204) des Ausgabedurchsatzes der Schlange;
        o wenn die bezogene zweite Information für einen gegenwärtigen Zeitpunkt nach oder gleich dem zuvor bestimmten Datum repräsentativ ist, Ausführen des Schritts des Erhöhens (213) des Ausgabedurchsatzes der Schlange.

5. Verfahren nach einem der Ansprüche 1 bis 4, wobei die stromaufwärtige Knoteneinrichtung ein Breitband-Zugangsserver und die stromabwärtige Knoteneinrichtung ein Zugangsmultiplexer für die digitale Teilnehmerleitung ist.

6. Verfahren nach einem der Ansprüche 1 bis 4, wobei die stromaufwärtige Knoteneinrichtung ein Paket-Datennetzwerkgateway oder ein konvergierender Gateway und die stromabwärtige Knoteneinrichtung eine Antenne oder eine Basisstation ist.

7. Computerprogrammprodukt, umfassend Programmcode-Anweisungen für die Umsetzung eines Verfahrens nach einem der Ansprüche 1 bis 6, wenn das Programm auf einem Computer ausgeführt wird.

8. Computerlesbares und nichtflüchtiges Speichermedium, das ein Computerprogrammprodukt nach Anspruch 7 speichert.

9. Verarbeitungsvorrichtung (300), die dazu ausgebildet ist, ein Verfahren zur Verarbeitung von Datenpaketen durchzuführen, die von einer stromaufwärtigen Netzknoteneinrichtung (100) empfangen werden und dazu bestimmt sind, über eine stromabwärtige Netzknoteneinrichtung (101) und über eine Kommunikationsverbindung an ein Endgerät (102) übertragen zu werden, wobei die stromaufwärtige Knoteneinrichtung eine Warteschlange (121) für nicht vorrangige Datenpakete (111) umfasst, die für das Endgerät bestimmt sind, die geeignet ist, eine vorbestimmte Anzahl von Datenpaketen vor deren Übertragung an die stromabwärtige Knoteneinrichtung zu speichern, wobei die Vorrichtung **dadurch gekennzeichnet ist, dass** sie eine umprogrammierbare Rechenmaschine (502) umfasst, die dazu ausgebildet ist, oder eine dedizierte Rechnenmaschine, die dazu ausgebildet ist:

    • eine erste Information zu beziehen, die für einen Füllzustand der Warteschlange der stromaufwärtigen Knoteneinrichtung über einen vorbestimmten Beobachtungszeitraum repräsentativ ist;
    • einen Ausgabedurchsatz der Schlange zu verringern, wenn die bezogene erste Information einen Wert aufweist, der einen Füllstand der Schlange unter oder gleich einer vorbestimmten ersten unteren Schwelle ungleich null angibt;
    • den Ausgabedurchsatz der Schlange zu erhöhen, wenn die bezogene erste Information einen Wert aufweist, der einen Füllstand der Schlange über einer vorbestimmten ersten oberen Schwelle angibt, die über der ersten unteren Schwelle liegt.

10. Netzknoteneinrichtung, stromaufwärtiger Knoten (100) genannt, die geeignet ist, Datenpakete über eine Netzeinrichtung, stromabwärtiger Knoten genannt, und über eine Kommunikationsverbindung an ein Endgerät zu übertragen, wobei der stromaufwärtige Knoten **dadurch gekennzeichnet ist, dass** er eine Verarbeitungsvorrichtung (300) nach Anspruch 9 umfasst.

**Claims**

1. Method for processing data packets that are received by a network node equipment referred to as upstream (100) and are intended to be transmitted to a terminal equipment (102) via a network node equipment referred to as downstream (101) and via a communication link, said upstream node equipment comprising a queue (121) of non-priority data packets (111) that are intended for said terminal equipment, which is able to store a predetermined number of data packets before their transmission to the downstream node equipment, said method being **characterized in that** it is implemented by said upstream node and **in that** it comprises the following steps:

• obtaining (201a, 201b) a first item of information representative of a fill state of said queue of the upstream node equipment, over a predetermined observation period;
• when said first item of information obtained has a value indicative of a level of filling of the queue lower than or equal to a first predetermined non-zero lower threshold, reducing (203) an output rate of said queue;
• when said first item of information obtained has a value indicative of a level of filling of the queue higher than a first predetermined upper threshold higher than said first lower threshold, increasing (213) said output rate of said queue.

2. Method according to Claim 1, wherein said first item of information representative of a fill state of said queue is obtained using an active queue management method.

3. Method according to either one of Claims 1 and 2, wherein said first item of information belongs to the group comprising:

• an estimate of a time taken by one or more data packets to pass through said queue over said predetermined observation period;
• an estimate of a level of filling of said queue over said predetermined observation period.

4. Method according to any one of Claims 1 to 3, further comprising the following sub-steps:

• when said first item of information obtained has a value indicative of a level of filling of the queue higher than said first upper threshold:

◦ obtaining (210) a second item of information representative of a present instant; and
◦ when said second item of information obtained is representative of a present instant prior to a date determined beforehand, reducing or maintaining (204) said output rate of said queue;
◦ when said second item of information obtained is representative of a present instant subsequent or equal to said date determined beforehand, executing said step of increasing (213) the output rate of said queue.

5. Method according to any one of Claims 1 to 4, wherein said upstream node equipment is a broadband access server and said downstream node equipment is a digital subscriber line access multiplexer.

6. Method according to any one of Claims 1 to 4, wherein said upstream node equipment is a packet data network gateway or a converged gateway and said downstream node equipment is an antenna or a base station.

7. Computer program product, comprising program code instructions for implementing a method according to any one of Claims 1 to 6, when said program is executed on a computer.

8. Computer-readable and non-transitory storage medium storing a computer program product according to Claim 7.

9. Processing device (300), configured to implement a method for processing data packets that are received by a network node equipment referred to as upstream (100) and are intended to be transmitted to a terminal equipment (102) via a network node equipment referred to as downstream (101) and via a communication link, said upstream node equipment comprising a queue (121) of non-priority data packets (111) that are intended for said terminal equipment, which is able to store a predetermined number of data packets before their transmission to the downstream node equipment, said device being **characterized in that** it comprises a reprogrammable computing machine (502) or a dedicated computing machine configured to:

• obtain a first item of information representative of a fill state of said queue of the upstream node equipment, over a predetermined observation period;
• reducing an output rate of said queue when said first item of information obtained has a value indicative of a level of filling of the queue lower than or equal to a first predetermined non-zero lower threshold;
• increasing said output rate of said queue when said first item of information obtained has a value indicative of a level of filling of the queue higher than a first predetermined upper threshold higher than said first lower threshold.

10. Network node equipment, referred to as upstream node (100), able to transmit data packets to a terminal equipment via a network equipment, referred to as downstream node, and via a communication link, the upstream node being **characterized in that** it comprises a processing device (300) according to Claim 9.

**Figure 1**

**Figure 2a**

200

201b

2010 → 202

205 ← 2011

210

**Figure 2b**

**Figure 2c**

**Figure 2d**

**Figure 3a**

**Figure 3b**

**Figure 4**

300

502

501    503

**Figure 5**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 2014321275 A1

**Littérature non-brevet citée dans la description**

- An Architecture for Differentiated Services. *RFC 2475,* Décembre 1998
- TS 23.107 version 8.2.0 Release 8. *3GPP, ''QoS Concept and Architecture,* 2011

- **RONG PAN ; PREETHI NATARAJAN ; CHIARA PIGLIONE ; MYTHILI SURYANARAYANA PRABHU ; VIJAY SUBRAMANIAN ; FRED BAKER ; BILL VERSTEEG.** PIE: A lightweight control scheme to address the bufferbloat problem. *IEEE International Conférence on High Performance Switching and Routing,* 2013, 148-155
- **KATHLEEN M. NICHOLS ; VAN JACOBSON.** Controlling Queue Delay. *ACM Queue,* Mai 2012, vol. 10 (5